# EUROPEAN PATENT APPLICATION

(11) **EP 1 908 357 A1**
(43) Date of publication of application: **09.04.2008**
(21) Application number: 07253753.3
(22) Date of filing: 21.09.2007
(51) Int. Cl.: A23L 1/212, A23L 1/29, A01H 5/12

(54) **Method for producing baby leaf lettuce**

(30) Priority: 21.09.2006 US 846305 P
(71) Applicant: Shamrock Seed Company, Inc., Salinas, CA 93901 (US)
(72) Inventor: Griffin, David Sean, Salinas, CA 93908 (US)
(74) Representative: Bentham, Andrew

(57) **Abstract**

A method for producing baby leaf lettuce is disclosed. The invention relates to using dwarf lettuce plants for baby leaf lettuce production in the field and in the greenhouse instead of non-dwarf conventional lettuce. The invention further relates to planting dwarf lettuce seed at a high density in the field and harvesting dwarf baby leaf lettuce leaves over a longer period of time than that for non-dwarf conventional lettuce.

## Description

### BACKGROUND OF THE INVENTION

This application claims the benefit of U.S. Provisional Application No. 60/846,305, filed September 21, 2006 which is hereby incorporated in its entirety by reference.

The present invention relates to a new method for producing baby leaf lettuce *(Lactuca sativa* L.). All publications cited in this application are herein incorporated by reference.

Practically speaking, all cultivated forms of lettuce belong to the highly polymorphic species *Lactuca sativa.* As a crop, lettuce is grown commercially wherever environmental conditions permit the production of an economically viable yield. Lettuce is the world's most popular salad. In the United States, the principal growing regions are California and Arizona which produce approximately 329,700 acres out of a total annual acreage of more than 333,300 acres (USDA, 2005). Fresh lettuce is available in the United States year-round although the greatest supply is from May through October. For planting purposes, the lettuce season is typically divided into three categories, early, mid and late, with the coastal areas planting from January to August, and the desert regions planting from August to December. Fresh lettuce is consumed nearly exclusively as fresh, raw product and occasionally as a cooked vegetable.

In the last few years packaged fresh salad mixes have become very popular with consumers. Among these packaged fresh salad mixes are baby leaf lettuce mixes and spring mixes which include baby leaf lettuce. Baby leaf lettuce salads are also a popular type of salad in the restaurant industry. There are many types of lettuce currently under baby leaf production including green and red romaine, green and red leaf (Batavia), green and red little gem (Bibb), red and green oak leaf, lollo rossa, lollo bionda, lollo verde, red and green tango, iceberg and butterhead.

Lettuce has been grown for baby leaf salads for more than 20 years and more recently for packaged fresh salad mixes. Growing lettuce for baby leaf salads and packaged salad mixes is a common production approach and is practiced throughout the world.

Germination is accomplished through the addition of water. Lettuce intended for use as baby leaf is harvested in as little as 20 days to 50 days after germination depending on the weather and season. The lettuce is harvested by hand or machine. After being harvested the lettuce leaves can be either washed or unwashed and can be either mixed or sold as separate leaves.

It has long been noted that lettuce sold as baby leaf lettuce lacks the taste, texture, and crispness of mature lettuce. Baby leaf lettuce is rather tasteless and limp and is usually mixed with other plant leaves to give more flavor and texture to the salad.

The foregoing examples of the related art and limitations related therewith are intended to be illustrative and not exclusive. Other limitations of the related art will become apparent to those of skill in the art upon a reading of the specification.

### SUMMARY OF THE INVENTION

The following embodiments and aspects thereof are described in conjunction with systems, tools, and methods which are meant to be exemplary and illustrative, not limiting in scope. In various embodiments, one or more of the above-described problems have been reduced or eliminated, while other embodiments are directed to other improvements.

According to the invention, there is provided a new method for producing baby leaf lettuce comprising the steps of planting seeds of dwarf lettuce, growing dwarf lettuce plants and harvesting leaves of dwarf lettuce plants.

Another aspect of the present invention is to provide baby leaf lettuce which has leaves which weigh more than conventional baby leaf lettuce leaves, have greater shelf life and can be harvested over a longer time than conventional baby leaf lettuce leaves.

Another aspect of the present invention is to provide a method for producing baby leaf lettuce wherein seeds of dwarf lettuce planted in a field at a density of between 1 million seeds per acre and 5 million seeds per acre.

Another aspect of the present invention is to provide a method for producing baby leaf lettuce wherein seeds of dwarf lettuce are planted in a field with an average final spacing of between zero inches and 3 inches.

Another aspect of the present invention is to provide a method for producing baby leaf lettuce wherein the dwarf iceberg lettuce is selected from the dwarf iceberg cultivars Blush, Ice Cube, and Mini-Green.

Another aspect of the present invention is to provide a method for producing baby leaf lettuce wherein the dwarf lettuce is a transformed lettuce which is deficient in gibberellic acid.

Another aspect of the present invention is to provide a method for producing baby leaf lettuce wherein the dwarf lettuce is a naturally occurring dwarf lettuce.

Another aspect of the present invention is to provide a method for producing baby leaf lettuce wherein dwarf lettuce is grown for baby leaf lettuce and the dwarf lettuce contains the one or more alleles selected from the group consisting of dwf-2, dwf-3, dwf-4, dwarf-5, bas1, L10, 69, rot3, cyp90c1, cyp90d1, at least one gene modulator of protein CYP90B, one or more genes for at least one brassinosteroid-specific glycosyltransferase, a gibberellin 20-oxidase gene, and an antisense nucleotide of OsBRl1.

In addition to the exemplary aspects and embodiments described above, further aspects and embodiments will become apparent by reference by study of the following descriptions.

### DEFINITIONS

In the description and tables which follow, a number of terms are used. In order to provide a clear and consistent understanding of the specification and claims, including the scope to be given such terms, the following definitions are provided:

Allele. An allele is any of one or more alternative forms of a gene which relate to one trait or characteristic. In a diploid cell or organism, the two alleles of a given gene occupy corresponding loci on a pair of homologous chromosomes.

Alter. The utilization of up-regulation, down-regulation, or gene silencing.

Average final spacing. Average final spacing means the space left between plants after any thinning has been done after planting and germination have occurred. For the present invention, average final spacing between dwarf lettuce plants is between zero inches and 3 inches, inclusive; that is a final spacing of 0, 1/16, 1/8, 1/4, 1/2, 3/4, 1, 11/16, 11/8, 11/4, 11/2, 1 3/4, 2, 2 1/16, 2 1/8, 2 1/4, 2 1/2, 2 3/4, and 3 inches, inclusive.

Average head diameter. Average head diameter is the average diameter of the cut and trimmed head, sliced vertically, and measured at the widest point perpendicular to the stem.

Average head height. Average head height is the average height of the cut and trimmed head, sliced vertically, and measured from the base of the cut stem to the cap leaf.

Average head weight. Average head weight is the average weight of a saleable lettuce head, cut and trimmed to market specifications.

Average planting rate. Average planting rate means the number of seeds per acre that are planted at one time. For the method of the present invention, the planting rate of dwarf lettuce seeds is between 800,000 and 5 million seeds per acre, inclusive; for example, a planting rate of 800,000, 900,000, 1 million, 1.2, 1.4, 1.6, 1.8, 2.0, 2.2, 2.4, 2.6, 2.8, 3.0, 3.2, 3.4, 3.6, 3.8, 4.0, 4.2, 4.6, 4.8 and 5.0 million seeds per acre inclusive.

Baby leaf. Baby leaf means leaves cut from immature lettuce plants. Baby leaf lettuce leaves consist of the first four to six true leaves of a lettuce plant.

Baby leaf size. The industry standard for baby leaf lettuce leaf size is between 35 mm and 140 mm in length and 25 mm to 75 mm wide.

Backcrossing. Backcrossing is a process in which a breeder repeatedly crosses hybrid progeny back to one of the parents, for example, a first generation hybrid F₁ with one of the parental genotypes of the F₁ hybrid.

Bolting. The premature development of a flowering stalk, and subsequent seed, before a plant produces a food crop. Bolting in lettuce is typically caused by a combination of high light intensity and high temperatures.

Brassinosteroid. Brassinosteroids are a group of plant hormones involved in many different aspects of plant growth including elongation of stems, growth of pollen tubes, inclination of leaves, opening of leaves, suppression of roots, activation of proton pumps (Mandava et al. 1988. Ann. Rev. Plant Physiol. Plant Mol. Biol., 39:23-52), acceleration of ethylene production (Schlagnhaufer et al. 1984. Physiol. Plant, 61:555-558), differentiation of vessel elements (lwasaki et al. 1991. Plant Cell Physiol. 32:1007-1014; Yamamoto et al., 1997. Plant Cell Physiol. 38:980-983), and cell extension (Azpiroz et al. 1998. Plant Cell, 10:219-230). Plants which are lacking in certain brassinosteroids or which are insensitive to certain brassinosteroids often display the dwarf phenotype.

*Bremia lactucae.* A common fungus that causes downy mildew in lettuce in cooler growing regions.

Cell. Cell as used herein includes a plant cell, whether isolated, in tissue culture or incorporated in a plant or plant part.

Core length. Length of the internal lettuce stem measured from the base of the cut and trimmed head to the tip of the stem.

Cotyledon. One of the first leaves of the embryo of a seed plant; typically one in monocotyledons, two in dicotyledons and two or more in gymnosperms. Lettuce is a dicotyledonous plant and has two cotyledons.

Crisphead lettuce. The term crisphead lettuce means iceberg lettuce.

Dwarf allele. As used herein, dwarf allele means an allele or gene that by its direct or indirect action results in dwarfism in a plant. Dwarfism in a plant may also result from the inaction of an allele, that is, by the lack of expression of the allele within the plant. A dwarf allele may be a naturally occurring lettuce dwarf allele or a dwarf allele from another plant species, or a transgene introduced through genetic engineering techniques. Examples of alleles which result in dwarfism include, but are not limited to, dwf-2, dwf-3, dwf-4, dwarf-5, bas1, L10, 69, rot3, cyp90c1, cyp90d1, at least one gene modulator of protein CYP90B, one or more genes for at least one brassinosteroid-specific glycosyltransferase, a gibberellin 20-oxidase gene, and an antisense nucleotide of OsBRl1.

Dwarf Dwarfism). As used herein dwarf (dwarfism) is a condition wherein the lettuce plant, or a part thereof, is reduced in size by a significant amount, e.g. a 20% or greater size reduction in head diameter and/or a 20% or greater size reduction in leaf size at maturity compared to the same cultivar or genotype without the dwarf allele.

Dwarf lettuce plant. Dwarf lettuce plant means any lettuce cultivar or genotype that contains one or more genes or alleles for dwarfism. Some examples of dwarf lettuce plants are cultivars Blush, Ice Cube, Mini-Green or lettuce plants having alleles which result in dwarfism, such alleles include but are not limited to, dwf-2, dwf-3, dwf-4, dwarf-5, bas1, L10, 69, rot3, cyp90c.1, cyp90d1, at least one gene modulator of protein CYP90B, one or more genes for at least one brassinosteroid-specific glycosyltransferase, a gibberellin 20-oxidase gene, and an antisense nucleotide of OsBRl1. Dwarf lettuce plant also includes any lettuce plant which has been transformed with a nucleic acid which results in the dwarf phenotype or which has been treated with a mutagen which results in the dwarf phenotype.

Field. Field means a commercial lettuce field. Commercial lettuce fields vary in size depending on the type, popularity and demand of the lettuce planted. Most commercial lettuce fields are 5 acres to 40 acres. Commercial baby leaf lettuce fields are larger than 0.1 acre. According to the invention, a field will preferably thus be larger than 0.1 acre, more preferably at least 0.2, 0.3, 0.4, 0.5, 2, 3, 5, 10, 20, 30 or 40 acres.

First water date. First water date is the date the seed first receives adequate moisture to germinate. First water date is often the planting date or within a few days of planting.

Gene Silencing. The interruption or suppression of the expression of a gene at the level of transcription or translation.

Genotype. Refers to the genetic constitution of a cell or organism.

Gibberellic acid (GA). Gibberellic acid (GA) is a plant growth hormone which promotes the growth and elongation of plant cells. Plants lacking GA are often dwarf in size.

Head. Lettuce head means lceberg lettuce.

Maturity. Maturity means the stage when the plants or leaves are of full size or optimum weight, in marketable form or shape to be of commercial or economic value.

Minimum baby leaf size. Minimum baby leaf size means lettuce leaves which are at least 35 mm in length and 25 mm in width.

Over-size. Over-size means out of market specifications because the lettuce leaf length and/or width is too large.

Plant. As used herein, the term "plant" includes reference to an immature or mature whole plant, including a plant from which seed or anthers have been removed. Seed or embryo that will produce the plant is also considered to be the plant.

Plant parts. As used herein, the term "plant parts" (or a lettuce plant, or a part thereof) includes protoplast, leaf, stem, root, root tip, anther, pistil, seed, embryo, pollen, ovule, cotyledon, hypocotyl, flower, shoot, tissue, petiole, cell, meristematic cell and the like.

Quantitative trait loci (QTL). Quantitative trait loci (QTL) refer to genetic loci that control to some degree numerically representable traits that are usually continuously distributed.

Ratio of head height/diameter. The ratio of head height to head diameter is determined by dividing the head height by the head diameter. This ratio is an indication of the head shape; a ratio of <1 indicates a flattened head shape, a ratio of 1 indicates a round head shape, and a ratio of >1 indicates a pointed head shape.

Regeneration. Regeneration refers to the development of a plant from tissue culture.

RHS. RHS refers to the Royal Horticultural Society of England which publishes an official botanical color chart quantitatively identifying colors according to a defined numbering system. The chart may be purchased from Royal Horticulture Society Enterprise Ltd RHS Garden; Wisley, Woking; Surrey GU236QB, UK.

Single gene converted (conversion). Single gene converted (conversion) plants refers to plants which are developed by a plant breeding technique called backcrossing wherein essentially all of the desired morphological and physiological characteristics of a variety are recovered in addition to the single gene transferred into the variety via the backcrossing technique or via genetic engineering.

True leaf. A true leaf is a leaf typical of a lettuce plant that appears subsequent to the cotyledons. The first true leaf is the first leaf that appears after the two cotyledons; the second true leaf is the second leaf that appears after the two cotyledons and so on.

### DETAILED DESCRIPTION OF THE INVENTION

The present invention provides a new method for producing baby leaf lettuce comprising the steps of planting seeds of dwarf lettuce, growing dwarf lettuce plants and harvesting leaves of dwarf lettuce plants. The resulting baby leaf lettuce has leaves which are thicker and weigh more than conventional non-dwarf baby leaf lettuce leaves, has greater shelf life and can be harvested over a longer time than conventional non-dwarf baby leaf lettuce leaves.

The method of the present invention includes sowing dwarf lettuce seed with either a broadcast spreader or a precision seeder. The method of the present invention also includes sowing dwarf lettuce seed on preformed bed tops, ground level, bench tops or in trays, in glasshouses, open fields or under protective mesh or "hoop houses". The seed is sown by hand or by machine.

In 1994, the United States Department of Agriculture (USDA) released three dwarf iceberg lettuce varieties, Blush, Ice Cube and Mini-Green (Waycott, W. et al. 1994. 'Ice Cube', 'Blush', and 'Mini-Green': miniature crisphead lettuce cultivars. HortScience 29:333-334). These varieties were the result of a cross between a double mutant dwarf lettuce variety and the non-dwarf conventional lettuce variety Salinas. The USDA dwarf lettuce varieties have a deficiency of gibberellic acid (GA) caused by mutant alleles which results in dwarfism (Waycott et al. 1995. Inheritance of dwarfing genes in Lactuca sativa L. J. Heredity. 86:39-44). These varieties were novelties and never sold on a large commercial scale. They have been sold as whole head novelties and their seeds have been sold for use in home gardens but they have never been used or studied for baby leaf production. Currently, no dwarf lettuce plants are grown to produce baby leaf lettuce.

Dwarf baby leaf lettuce leaves produced by the present invention are unexpectedly much thicker and weigh more than their non-dwarf, conventional lettuce counterparts. When dwarf lettuce is grown as a baby leaf the resulting leaves unexpectedly have much improved taste, texture, and crispness. Dwarf baby leaves are very similar in taste, texture and appearance to mature non-dwarf conventional lettuce leaves.

In addition to their improved leaf characteristics, dwarf baby leaf lettuce leaves unexpectedly have a 3 to 5 day greater shelf life as a packaged product than do non-dwarf conventional lettuce leaves grown for baby leaf production. Dwarf lettuce used in the present invention does not over-size because the mechanism causing dwarfism limits the leaf size, and unexpectedly results in leaves within commercial specifications (length and width restrictions) for a much longer time period e.g. 5-15 days longer compared to non-dwarf conventional lettuce varieties.

Dwarf lettuce is slower to mature than non-dwarf conventional lettuce. The slower maturation is related to the dwarfism. Maturation of dwarf lettuce as a baby leaf is from 3 to 15 days longer than comparable leaves of similar non-dwarf varieties. Unexpectedly dwarf baby leaf lettuce can be harvested over a 10-day period after reaching baby leaf size without affecting quality whereas non-dwarf conventional lettuce must be cut within 5 days of maturing, that is, within 5 days of reaching baby leaf market specifications on length and width, otherwise it will be over-size. This increased number of days for harvest is important because it allows growers to delay harvesting the crop when there is bad weather or when prices are unfavorable.

Dwarf baby leaf lettuce is much higher yielding than standard non-dwarf baby leaf lettuce. The slower, dwarf maturation unexpectedly results in thicker leaves and ultimately higher yields (weight/surface area). Dwarf baby leaf lettuce yields are from 5% to 50% or more greater than comparable non-dwarf conventional baby lettuce leaves.

### EXAMPLES

### Example 1. Method for Using Dwarf Iceberg Lettuce Cultivar Mini-Green for Baby Leaf Lettuce Production

According to the method of the present invention, dwarf iceberg lettuce cultivar Mini-Green was used to produce baby leaf lettuce. Dwarf iceberg lettuce cultivar Mini-Green has solid dark green heads about the size of a tennis ball or slightly larger. Mini-Green is less susceptible to tip-burn than most head lettuces and is resistant to bolting. Cultivar Mini-Green lettuce seed, either pelleted or raw, is sown at a high density, generally between one million seeds per acre and 5 million seeds per acre. In the present invention, the average final spacing between plants can be as much as three inches (7.62 cm) or as little zero inches (0 cm) (i.e. the plants can actually be touching each other) for a final stand of 3 million seeds per acre. The narrow spacing between dwarf lettuce plants is similar to the spacing of the non-dwarf conventional lettuce used for baby leaf production. Baby leaf spacing is in contrast to that of conventional whole head non-baby leaf iceberg lettuce plants which require an average spacing of approximately 11 inches (28 cm) or more between plants resulting in only 24,000 plants per acre.

The method of the present invention includes sowing dwarf lettuce seed by machine or hand in a field on a 30-inch, 36-inch, 38-inch, 40-inch, 42-inch or 80-inch bed. The dwarf lettuce seeds are sown on the beds in lines of 2 seed lines, 4 seed lines, 8 seed lines, 10 seed lines, 12 seed lines, up to 32 seed lines per bed. The method of the present invention includes a planting rate of dwarf lettuce seeds between 800,000 and 5 million seeds per acre, inclusive; for example, a planting rate of 800,000, 900,000, 1 million, 1.2, 1.4, 1.6, 1.8, 2.0, 2.2, 2.4, 2.6, 2.8, 3.0, 3.2, 3.4, 3.6, 3.8, 4.0, 4.2, 4.6, 4.8 and 5.0 million seeds per acre inclusive. The final stand of dwarf lettuce plants used for baby leaf production is about 90% of the planting rate. The method of the present invention also includes sowing dwarf lettuce seed on preformed bed tops, ground level, bench tops or in trays, in glasshouses, open fields or under protective mesh or "hoop houses". The seed is sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves. Seeds of cultivar Mini-Green can be obtained from the National Center for Genetic Resources Preservation, 1111 South Mason, Fort Collins, Colorado 80521 or the United States Agricultural Research Station, United States Department of Agriculture, Agricultural Research Service, 1636 East Alisal Street, Salinas, California 93905.

### Example 2 Method for Using Dwarf Iceberg Lettuce Cultivar Mini-Green for Baby Leaf Lettuce Production in the Field

According to the method of the present invention, dwarf iceberg lettuce cultivar Mini-Green lettuce seeds were sown raw in an open outdoor field of raised beds near Gilroy, California at a rate of 3.2 million seeds per acre. The average final spacing between plants within the seed line was approximately 1/4 inch (0.32 cm) apart on a 40-inch (102 cm) bed. There were 8 seed lines on each 12-inch bed top; the spacing between each seed line was 1.3 inches. The average final stand for Mini-Green was 3 million plants per acre. In a similar field, seeds of non-dwarf conventional iceberg lettuce cultivar Blockbuster were sown raw at a rate of 3.2 million seeds per acre. The average final spacing between the non-dwarf conventional Blockbuster lettuce plants within the seed line was approximately 1/4 inch apart on a 40-inch (102 cm) bed. The average final stand for Blockbuster was 3 million plants per acre. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on September 12, 2006, in the fall. Both types of plants were evaluated 45 days after planting on October 27, 2006 when the non-dwarf conventional lettuce cultivar Blockbuster leaves had nearly reached baby leaf market size. Table 1 shows the comparison between the sizes in millimeters of the first three true leaves of Mini-Green (MG) and Blockbuster (BB) 45 days after planting. Mini-Green is the dwarf variety and Blockbuster is the non-dwarf, conventional variety.

As shown in Table 1, the dwarf Mini-Green lettuce leaves are significantly smaller in both length and width than the leaves of the non-dwarf conventional Blockbuster. The dwarf allele unexpectedly causes the Mini-Green plants to mature more slowly than the non-dwarf conventional plants and this is reflected in the leaf size differences. The first true leaf of Mini-Green (MG, the dwarf lettuce cultivar) is 66% the length and 58.7% the width of Blockbuster (BB, the non-dwarf conventional lettuce cultivar); the second true leaf of Mini-Green in 67.8% the length and 61.5% the width of Blockbuster; and the third true leaf of Mini-Green is 65.4% the length and 63.8% the width of Blockbuster 45 days after planting. Overall, 45 days after planting, the dwarf lettuce cultivar leaves are approximately two-thirds the size of the non-dwarf conventional lettuce leaves. The slower and smaller growth rate of the dwarf lettuce in the method of the present invention allows for the leaves to stay within market specifications for a much longer time. It also adds to the leaf thickness and provides a baby leaf size with many mature leaf qualities (texture and flavor). Thus, the method of the present invention provides lettuce leaves that will continue to be baby leaf size after the leaves of the non-dwarf conventional lettuce cultivar have become oversize.

**TABLE 1. Comparison of Dwarf Lettuce Cultivar Mini-Green (MG) and Non-Dwarf Lettuce Cultivar Blockbuster (BB) First Three True Leaf Sizes in mm 45 Days after Planting.**

| | | **1^{st} Leaf** | | **2^{nd} Leaf** | | **3^{rd} Leaf** | |
|---|---|---|---|---|---|---|---|
| **Plant #** | **L/W** | **MG** | **BB** | **MG** | **BB** | **MG** | **BB** |
| 1 | Length | 37 | 71 | 35 | 46 | 39 | 49 |
| | Width | 28 | 68 | 35 | 63 | 32 | 47 |
| 2 | Length | 28 | 61 | 38 | 58 | 41 | 64 |
| | Width | 22 | 53 | 39 | 44 | 39 | 59 |
| 3 | Length | 41 | 64 | 41 | 72 | 42 | 55 |
| | Width | 29 | 53 | 35 | 64 | 39 | 48 |
| 4 | Length | 34 | 75 | 44 | 76 | 38 | 63 |
| | Width | 21 | 70 | 36 | 49 | 33 | 58 |
| 5 | Length | 41 | 65 | 38 | 70 | 43 | 80 |
| | Width | 36 | 50 | 25 | 63 | 38 | 58 |
| 6 | Length | 41 | 59 | 38 | 74 | 41 | 65 |
| | Width | 37 | 45 | 22 | 58 | 30 | 55 |
| 7 | Length | 44 | 55 | 48 | 65 | 38 | 70 |
| | Width | 34 | 48 | 38 | 60 | 35 | 65 |
| 8 | Length | 35 | 50 | 37 | 62 | 35 | 63 |
| | Width | 27 | 42 | 25 | 61 | 29 | 49 |
| 9 | Length | 38 | 52 | 44 | 62 | 40 | 56 |
| | Width | 30 | 53 | 38 | 52 | 39 | 60 |
| 10 | Length | 43 | 72 | 47 | 72 | 51 | 76 |
| | Width | 28 | 50 | 40 | 52 | 41 | 64 |
| 11 | Length | 37 | 66 | 38 | 73 | 45 | 78 |
| | Width | 31 | 57 | 25 | 66 | 36 | 65 |
| 12 | Length | 41 | 72 | 45 | 52 | 38 | 82 |
| | Width | 38 | 63 | 41 | 40 | 40 | 67 |
| 13 | Length | 44 | 58 | 41 | 70 | 43 | 76 |
| | Width | 34 | 43 | 38 | 43 | 36 | 57 |
| 14 | Length | 48 | 62 | 52 | 63 | 48 | 50 |
| | Width | 31 | 56 | 38 | 60 | 35 | 44 |
| 15 | Length | 40 | 55 | 50 | 63 | 46 | 53 |
| | Width | 25 | 52 | 35 | 62 | 31 | 42 |
| 16 | Length | 38 | 51 | 41 | 55 | 45 | 60 |
| | Width | 27 | 54 | 32 | 50 | 40 | 61 |
| 17 | Length | 42 | 61 | 46 | 53 | 50 | 70 |
| | Width | 25 | 52 | 35 | 44 | 40 | 59 |
| 18 | Length | 45 | 63 | 42 | 50 | 49 | 51 |
| | Width | 37 | 60 | 31 | 47 | 38 | 52 |
| 19 | Length | 35 | 54 | 37 | 59 | 40 | 65 |
| | Width | 33 | 42 | 33 | 55 | 35 | 55 |
| 20 | Length | 48 | 64 | 40 | 54 | 43 | 69 |
| | Width | 25 | 52 | 34 | 44 | 37 | 63 |
| 21 | Length | 40 | 63 | 42 | 68 | 46 | 68 |
| | Width | 25 | 53 | 25 | 65 | 40 | 58 |
| 22 | Length | 45 | 55 | 39 | 47 | 42 | 62 |
| | Width | 41 | 43 | 28 | 45 | 34 | 53 |
| 23 | Length | 36 | 53 | 42 | 56 | 39 | 68 |
| | Width | 25 | 44 | 32 | 48 | 32 | 56 |
| 24 | Length | 43 | 70 | 45 | 71 | 41 | 75 |
| | Width | 33 | 45 | 37 | 40 | 32 | 47 |
| 25 | Length | 47 | 58 | 45 | 64 | 47 | 66 |
| | Width | 38 | 48 | 30 | 69 | 40 | 68 |
| Ave. Length | | 40.4 | 61.2 | 42.2 | 62.2 | 42.8 | 65.4 |
| Ave. Width | | 30.4 | 51.8 | 33.1 | 53.8 | 36.0 | 56.4 |

### Example 3. Method for Using Dwarf lceberg Lettuce Cultivar Mini-Green for Baby Leaf Lettuce Production in the Field

According to the method of the present invention, dwarf iceberg lettuce cultivar Mini-Green lettuce seeds were sown raw in an open outdoor field of raised beds near Gilroy, California at a rate of 3.2 million seeds per acre. The average final spacing between plants within the seed line was approximately 1/4 inch (0.32 cm) apart on a 40-inch (102 cm) bed. There were 8 seed lines on each 12-inch bed top; the spacing between each seed line was 1.3 inches. The average final stand for Mini-Green was 3 million plants per acre. In a similar field, seeds of non-dwarf conventional iceberg lettuce cultivar Blockbuster were sown raw at a rate of 3.2 million seeds per acre. The average final spacing between the non-dwarf conventional Blockbuster lettuce plants within the seed line was approximately 1/4 inch apart on a 40-inch (102 cm) bed. The average final stand for Blockbuster was 3 million plants per acre. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on October 10, 2006, in the late fall. Both types of plants were evaluated 30 days after planting on October 27, 2006. Table 2 shows the comparison between the sizes in millimeters of the first three true leaves of Mini-Green (MG) and Blockbuster (BB) 30 days after planting. Mini-Green is the dwarf variety and Blockbuster is the non-dwarf, conventional variety.

As shown in Table 2, the dwarf Mini-Green lettuce leaves are significantly smaller in both length and width than the leaves of the non-dwarf Blockbuster. The dwarf allele unexpectedly causes the Mini-Green plants to mature more slowly than the non-dwarf plants and this is reflected in the leaf size differences. The first true leaf of Mini-Green (MG, the dwarf lettuce cultivar) is 40.6% the length and 78.9% the width of Blockbuster (BB, the non-dwarf conventional lettuce cultivar); the second true leaf of MG is 39.7% the length and 56.7% the width of BB; and the third true leaf of MG is 37.8% the length and 64.7% the width of BB 30 days after planting. Overall, 30 days after planting, the dwarf lettuce cultivar leaves are about one-third the length and one-half to two-thirds the width of the non-dwarf conventional lettuce leaves. The slower and smaller growth rate of the dwarf lettuce in the method of the present invention allows for the leaves to stay within market specifications for a much longer time. It also adds to the leaf thickness and provides a baby leaf size with many mature leaf qualities (texture and flavor). Thus, the method of the present invention provides lettuce leaves which reach baby leaf size after the leaves of non-dwarf conventional lettuce cultivars reach baby leaf size providing a longer period for harvesting baby leaf lettuce.

**TABLE 2. Comparison of Dwarf Lettuce Cultivar Mini-Green (MG) and Non-Dwarf Lettuce Cultivar Blockbuster (BB) First Three True Leaf Sizes in mm 30 Days after Planting.**

| | | **1^{st} Leaf** | | **2^{nd} Leaf** | | **3^{rd} Leaf** | |
|---|---|---|---|---|---|---|---|
| **Plant #** | **L/W** | **MG** | **BB** | **MG** | **BB** | **MG** | **BB** |
| 1 | Length | 20 | 67 | 19 | 69 | 21 | 76 |
| | Width | 11 | 18 | 9 | 27 | 14 | 38 |
| 2 | Length | 22 | 64 | 26 | 68 | 24 | 75 |
| | Width | 19 | 18 | 17 | 31 | 21 | 34 |
| 3 | Length | 28 | 58 | 25 | 66 | 35 | 73 |
| | Width | 18 | 17 | 13 | 21 | 22 | 34 |
| 4 | Length | 29 | 60 | 33 | 68 | 30 | 65 |
| | Width | 16 | 19 | 20 | 31 | 22 | 35 |
| 5 | Length | 27 | 55 | 31 | 58 | 34 | 66 |
| | Width | 15 | 16 | 20 | 23 | 25 | 32 |
| 6 | Length | 27 | 66 | 30 | 58 | 29 | 65 |
| | Width | 15 | 18 | 19 | 22 | 27 | 28 |
| 7 | Length | 27 | 56 | 28 | 68 | 27 | 61 |
| | Width | 18 | 18 | 16 | 38 | 21 | 27 |
| 8 | Length | 27 | 66 | 31 | 66 | 35 | 68 |
| | Width | 13 | 26 | 18 | 38 | 22 | 33 |
| 9 | Length | 21 | 65 | 25 | 80 | 13 | 81 |
| | Width | 11 | 18 | 14 | 32 | 15 | 32 |
| 10 | Length | 28 | 60 | 33 | 82 | 33 | 82 |
| | Width | 16 | 17 | 19 | 29 | 22 | 36 |
| 11 | Length | 30 | 80 | 31 | 69 | 32 | 90 |
| | Width | 22 | 25 | 23 | 36 | 21 | 33 |
| 12 | Length | 24 | 77 | 25 | 81 | 22 | 44 |
| | Width | 11 | 24 | 17 | 29 | 20 | 23 |
| 13 | Length | 23 | 62 | 32 | 63 | 28 | 70 |
| | Width | 18 | 16 | 18 | 28 | 26 | 30 |
| 14 | Length | 35 | 55 | 40 | 72 | 33 | 81 |
| | Width | 19 | 15 | 24 | 24 | 27 | 35 |
| 15 | Length | 32 | 57 | 31 | 73 | 35 | 87 |
| | Width | 19 | 18 | 18 | 31 | 26 | 40 |
| 16 | Length | 25 | 65 | 30 | 83 | 25 | 84 |
| | Width | 14 | 20 | 18 | 35 | 27 | 40 |
| 17 | Length | 28 | 66 | 31 | 78 | 35 | 87 |
| | Width | 14 | 19 | 27 | 35 | 22 | 32 |
| 18 | Length | 27 | 66 | 36 | 84 | 35 | 98 |
| | Width | 17 | 18 | 20 | 27 | 22 | 30 |
| 19 | Length | 25 | 68 | 22 | 84 | 22 | 93 |
| | Width | 11 | 16 | 14 | 26 | 19 | 33 |
| | | | | | | | |
| 20 | Length | 27 | 68 | 31 | 81 | 34 | 90 |
| | Width | 14 | 18 | 18 | 30 | 21 | 38 |
| 21 | Length | 25 | 73 | 29 | 68 | 38 | 95 |
| | Width | 9 | 24 | 15 | 33 | 20 | 35 |
| 22 | Length | 23 | 65 | 32 | 74 | 32 | 93 |
| | Width | 13 | 18 | 17 | 32 | 21 | 35 |
| 23 | Length | 32 | 61 | 27 | 73 | 35 | 74 |
| | Width | 17 | 27 | 15 | 30 | 25 | 38 |
| 24 | Length | 22 | 65 | 23 | 77 | 25 | 80 |
| | Width | 12 | 18 | 12 | 30 | 23 | 39 |
| 25 | Length | 27 | 67 | 30 | 84 | 34 | 85 |
| | Width | 12 | 18 | 16 | 33 | 22 | 40 |
| Ave. Length | | 26 | 64 | 29 | 73 | 30 | 79 |
| Ave. Width | | 15 | 19 | 17 | 30 | 22 | 34 |

### Example 4. Method for Using Dwarf Iceberg Lettuce Cultivar Mini-Green for Baby Leaf Lettuce Production in the Field

According to the method of the present invention, dwarf iceberg lettuce cultivar Mini-Green lettuce seeds were sown raw in an open outdoor field of raised beds near Gilroy, California at a rate of 3.2 million seeds per acre. The average final spacing between plants within the seed line was approximately 1/4 inch (0.32 cm) apart on a 40-inch (102 cm) bed. There were 8 seed lines on each 12-inch bed top; the spacing between each seed line was 1.3 inches. The average final stand for Mini-Green was 3 million plants per acre. In a similar field, seeds of non-dwarf conventional iceberg lettuce cultivar Blockbuster were sown raw at a rate of 3.2 million seeds per acre. The average final spacing between the non-dwarf conventional Blockbuster lettuce plants within the seed line was approximately 1/4 inch apart on a 40-inch (102 cm) bed. The average final stand for Blockbuster was 3 million plants per acre. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on May 31, 2007, in the late spring. Both types of plants were evaluated 33 days after planting on July 3, 2007. Table 3 shows the comparison between the sizes in millimeters of the first four true leaves of Mini-Green (MG) and Blockbuster (BB) 33 days after planting. Mini-Green is the dwarf variety and Blockbuster is the non-dwarf, conventional variety.

As shown in Table 3, the dwarf Mini-Green lettuce leaves are significantly smaller in both length and width than the leaves of the non-dwarf Blockbuster. The dwarf allele unexpectedly causes the Mini-Green plants to mature more slowly than the non-dwarf plants and this is reflected in the leaf size differences. The first true leaf of Mini-Green (MG, the dwarf lettuce cultivar) is 56.3% of the length and 71.5% the width of Blockbuster (BB, the non-dwarf conventional lettuce cultivar); the second true leaf of MG is 51% the length and 67.5% the width of BB; the third true leaf of MG is 43.9% the length and 62% the width of BB; and the fourth true leaf of MG is 43.7% the length and 63.7% the width of BB 33 days after planting. Overall, 33 days after planting, the dwarf lettuce cultivar leaves are about half the length and two-thirds the width of the leaves of the non-dwarf conventional lettuce cultivar leaves. The slower and smaller growth rate of the dwarf lettuce in the method of the present invention allows for the leaves to stay within market specifications for a much longer time. It also adds to the leaf thickness and provides a baby leaf size with many mature leaf qualities (texture and flavor). Thus, the method of the present invention provides lettuce leaves that will continue to be baby leaf size after the leaves of the non-dwarf conventional lettuce cultivar have become oversize.

**TABLE 3. Comparison of Dwarf Lettuce Cultivar Mini-Green (MG) and Non-Dwarf Lettuce Cultivar Blockbuster (BB) First Four True Leaf Sizes in mm 33 Days after Planting.**

| | | **1^{st} Leaf** | | **2^{nd} Leaf** | | **3^{rd} Leaf** | | **4^{th} Leaf** | |
|---|---|---|---|---|---|---|---|---|---|
| **Plant #** | **L/W** | **MG** | **BB** | **MG** | **BB** | **MG** | **BB** | **MG** | **BB** |
| 1 | Length | 24 | 25 | 32 | 36 | 51 | 63 | 68 | 90 |
| | Width | 11 | 12 | 17 | 18 | 23 | 28 | 32 | 84 |
| 2 | Length | 21 | 48 | 30 | 45 | 46 | 46 | 76 | 64 |
| | Width | 12 | 28 | 17 | 53 | 22 | 68 | 37 | 32 |
| 3 | Length | 32 | 28 | 35 | 38 | 50 | 89 | 60 | 98 |
| | Width | 10 | 10 | 18 | 15 | 24 | 33 | 30 | 45 |
| 4 | Length | 22 | 28 | 26 | 45 | 40 | 77 | 54 | 96 |
| | Width | 12 | 11 | 18 | 21 | 28 | 38 | 38 | 44 |
| 5 | Length | 20 | 28 | 28 | 35 | 40 | 63 | 62 | 95 |
| | Width | 11 | 12 | 15 | 18 | 24 | 29 | 32 | 26 |
| 6 | Length | 25. | 27 | 32 | 35 | 49 | 74 | 55 | 105 |
| | Width | 12 | 13 | 19 | 21 | 28 | 34 | 35 | 36 |
| 7 | Length | 13 | 27 | 28 | 41 | 39 | 70 | 50 | 94 |
| | Width | 12 | 12 | 18 | 22 | 27 | 33 | 32 | 44 |
| 8 | Length | 20 | 56 | 30 | 99 | 41 | 138 | 51 | 155 |
| | Width | 9 | 26 | 24 | 40 | 28 | 52 | 35 | 52 |
| 9 | Length | 21 | 44 | 29 | 61 | 42 | 114 | 50 | 138 |
| | Width | 11 | 16 | 18 | 24 | 26 | 39 | 31 | 45 |
| 10 | Length | 19 | 44 | 22 | 61 | 38 | 114 | 40 | 143 |
| | Width | 11 | 14 | 15 | 27 | 25 | 32 | 27 | 58 |
| 11 | Length | 23 | 37 | 26 | 57 | 45 | 98 | 48 | 129 |
| | Width | 12 | 10 | 16 | 25 | 26 | 38 | 33 | 51 |
| 12 | Length | 24 | 52 | 40 | 67 | 58 | 109 | 60 | 157 |
| | Width | 11 | 17 | 27 | 31 | 27 | 44 | 37 | 59 |
| 13 | Length | 25 | 47 | 24 | 72 | 48 | 126 | 38 | 132 |
| | Width | 8 | 17 | 15 | 27 | 34 | 44 | 26 | 62 |
| 14 | Length | 28 | 37 | 23 | 55 | 42 | 96 | 46 | 137 |
| | Width | 7 | 13 | 16 | 17 | 28 | 40 | 36 | 51 |
| 15 | Length | 20 | 26 | 30 | 44 | 48 | 75 | 50 | 113 |
| | Width | 10 | 8 | 16 | 22 | 21 | 33 | 27 | 55 |
| 16 | Length | 18 | 31 | 28 | 72 | 43 | 104 | 58 | 144 |
| | Width | 7 | 12 | 16 | 28 | 23 | 42 | 28 | 32 |
| 17 | Length | 25 | 57 | 34 | 91 | 49 | 152 | 58 | 143 |
| | Width | 15 | 17 | 19 | 28 | 26 | 48 | 32 | 43 |
| 18 | Length | 19 | 54 | 48 | 102 | 65 | 165 | 82 | 180 |
| | Width | 12 | 17 | 25 | 31 | 31 | 43 | 41 | 59 |
| 19 | Length | 25 | 44 | 38 | 87 | 61 | 132 | 67 | 164 |
| | Width | 7 | 8 | 13 | 30 | 28 | 43 | 32 | 63 |
| 20 | Length | 23 | 45 | 29 | 89 | 52 | 144 | 56 | 171 |
| | Width | 6 | 10 | 10 | 30 | 26 | 43 | 25 | 55 |
| 21 | Length | 22 | 60 | 23 | 88 | 40 | 143 | 66 | 171 |
| | Width | 9 | 18 | 13 | 30 | 17 | 50 | 33 | 52 |
| 22 | Length | 19 | 51 | 40 | 78 | 59 | 129 | 75 | 165 |
| | Width | 10 | 17 | 22 | 27 | 28 | 38 | 36 | 61 |
| 23 | Length | 22 | 32 | 45 | 65 | 68 | 141 | 59 | 152 |
| | Width | 12 | 12 | 27 | 16 | 35 | 46 | 31 | 68 |
| 24 | Length | 23 | 57 | 36 | 102 | 60 | 137 | 55 | 154 |
| | Width | 8 | 15 | 16 | 43 | 29 | 51 | 22 | 43 |
| 25 | Length | 24 | 32 | 33 | 43 | 60 | 115 | 68 | 133 |
| | Width | 12 | 14 | 16 | 21 | 27 | 32 | 41 | 39 |
| Ave. Length | | 22.3 | 40.6 | 31.6 | 64.3 | 49.4 | 108.6 | 58.1 | 132.9 |
| Ave. Width | | 10.3 | 14.4 | 17.8 | 25.5 | 26.4 | 40.8 | 32.4 | 50.4 |

### Example 5. Method for Using Dwarf Iceberg Lettuce Cultivar Mini-Green for Baby Leaf Lettuce Production in the Field

According to the method of the present invention, dwarf iceberg lettuce cultivar Mini-Green lettuce seeds were sown raw in an open outdoor field of raised beds near Gilroy, California at a rate of 3.2 million seeds per acre. The average final spacing between plants within the seed line was approximately 1/4 inch (0.32 cm) apart on a 40-inch (102 cm) bed. There were 8 seed lines on each 12-inch bed top; the spacing between each seed line was 1.3 inches. The average final stand for Mini-Green was 3 million plants per acre. In a similar field, seeds of non-dwarf conventional iceberg lettuce cultivar Blockbuster were sown raw at a rate of 3.2 million seeds per acre. The average final spacing between the non-dwarf conventional Blockbuster lettuce plants within the seed line was approximately 1/4 inch apart on a 40-inch (102 cm) bed. The average final stand for Blockbuster was 3 million plants per acre. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on July 17, 2007, in the summer. Both types of plants were harvested when they reached market size. Table 4 shows the comparison between the sizes in millimeters of the first four true leaves of Mini-Green (MG) and Blockbuster (BB) at market size. Blockbuster, the non-dwarf conventional lettuce cultivar took 21 days to reach market size in the summer. Unexpectedly, Mini-Green, the dwarf cultivar, took 42 days to reach market size in the summer. Mini-Green is the dwarf variety and Blockbuster is the non-dwarf, conventional variety.

As shown in Table 4, the lengths of the dwarf lettuce cultivar leaves and those of the non-dwarf conventional lettuce cultivar were similar however the width of the non-dwarf conventional cultivar leaves was narrower than the width of the dwarf lettuce cultivar leaves. The first true leaf of Mini-Green (MG, the dwarf lettuce cultivar) was 106.8% the length and 263% the width of Blockbuster (BB, the non-dwarf conventional lettuce cultivar); the second true leaf of MG was 77.4% the length and 162.4% the width of BB; the third true leaf of MG was 77% the length and 165.9% the width of BB; and the fourth true leaf of MG was 125.5% the length and 232.1% the width of BB 42 days and 21 days after planting respectively. The slower and smaller growth rate of the dwarf lettuce in the method of the present invention allows for the leaves to stay within market specifications for a much longer time. It also adds to the leaf thickness and provides a baby leaf size with many mature leaf qualities (texture and flavor). Thus, the method of the present invention provides lettuce which can be harvested for baby leaf well after non-dwarf conventional lettuce has reached baby leaf size.

**TABLE 4. Comparison of Dwarf Lettuce Cultivar Mini-Green (MG) and Non-Dwarf Lettuce Cultivar Blockbuster (BB) First Four True Leaf Sizes in mm at Market Size 42 Days after Planting for MG and 21 Days after Planting for BB.**

| | | **1^{st} Leaf** | | **2^{nd} Leaf** | | **3^{rd} Leaf** | | **4^{th} Leaf** | |
|---|---|---|---|---|---|---|---|---|---|
| **Plant #** | **L/W** | **MG** | **BB** | **MG** | **BB** | **MG** | **BB** | **MG** | **BB** |
| 1 | Length | 60 | 53 | 63 | 97 | 81 | 81 | 96 | 47 |
| | Width | 43 | 16 | 48 | 37 | 65 | 27 | 67 | 20 |
| 2 | Length | 63 | 53 | 75 | 79 | 85 | 108 | 90 | 69 |
| | Width | 46 | 17 | 61 | 33 | 70 | 44 | 85 | 35 |
| 3 | Length | 70 | 53 | 75 | 83 | 85 | 109 | 86 | 78 |
| | Width | 54 | 20 | 52 | 34 | 62 | 42 | 62 | 35 |
| 4 | Length | 79 | 63 | 77 | 98 | 90 | 120 | 101 | 84 |
| | Width | 50 | 19 | 55 | 32 | 59 | 45 | 67 | 35 |
| 5 | Length | 60 | 49 | 62 | 95 | 73 | 90 | 79 | 41 |
| | Width | 42 | 15 | 51 | 35 | 67 | 31 | 70 | 21 |
| 6 | Length | 55 | 57 | 62 | 91 | 63 | 95 | 70 | 99 |
| | Width | 50 | 18 | 55 | 30 | 71 | 31 | 75 | 35 |
| 7 | Length | 51 | 63 | 62 | 77 | 70 | 98 | 81 | 60 |
| | Width | 40 | 20 | 46 | 36 | 50 | 45 | 61 | 28 |
| 8 | Length | 52 | 65 | 60 | 100 | 61 | 103 | 70 | 60 |
| | Width | 47 | 19 | 49 | 37 | 65 | 41 | 70 | 28 |
| 9 | Length | 65 | 50 | 64 | 72 | 73 | 95 | 88 | 64 |
| | Width | 60 | 18 | 61 | 28 | 68 | 35 | 75 | 30 |
| 10 | Length | 43 | 54 | 74 | 79 | 80 | 89 | 90 | 76 |
| | Width | 39 | 17 | 66 | 33 | 65 | 46 | 69 | 35 |
| Ave. Length | | 59.8 | 56 | 67.4 | 87.1 | 76.1 | 98.8 | 85.1 | 67.8 |
| Ave. Width | | 47.1 | 17.9 | 54.4 | 33.5 | 64.2 | 38.7 | 70.1 | 30.2 |

### Example 6. Method for Using Dwarf Iceberg Lettuce Cultivar Mini-Green for Baby Leaf Lettuce Production in the Field

According to the method of the present invention, dwarf iceberg lettuce cultivar Mini-Green lettuce seeds were sown raw in an open outdoor field of raised beds near Gilroy, California at a rate of 3.2 million seeds per acre. The average final spacing between plants within the seed line was approximately 1/4 inch (0.32 cm) apart on a 40-inch (102 cm) bed. There were 8 seed lines on each 12-inch bed top; the spacing between each seed line was 1.3 inches. The average final stand for Mini-Green was 3 million plants per acre. In a similar field, seeds of non-dwarf conventional iceberg lettuce cultivar Blockbuster were sown raw at a rate of 3.2 million seeds per acre. The average final spacing between the non-dwarf conventional Blockbuster lettuce plants within the seed line was approximately 1/4 inch apart on a 40-inch (102 cm) bed. The average final stand for Blockbuster was 3 million plants per acre. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on July 17, 2007, in the summer. Both types of plants were harvested when they reached market size. Table 5 shows the comparison between the leaf weights in grams of the first four true leaves of Mini-Green (MG) and Blockbuster (BB) at market size. Blockbuster, the non-dwarf conventional lettuce cultivar took 21 days to reach market size in the summer. Unexpectedly, Mini-Green, the dwarf cultivar, took 42 days to reach market size in the summer. Also unexpectedly, the first four true leaves of the dwarf lettuce cultivar weighed considerably more at market size than those of the non-dwarf lettuce cultivar as shown in Table 5. Mini-Green is the dwarf variety and Blockbuster is the non-dwarf, conventional variety.

As shown in Table 5, the weights of the first four true leaves of the dwarf lettuce cultivar weighed significantly more than those of the non-dwarf conventional lettuce cultivar. The first true leaf of Blockbuster (BB, the non-dwarf conventional lettuce cultivar) weighed 15.7% of the weight of the first true leaf of Mini-Green (MG, the dwarf lettuce cultivar); the second true leaf of BB weighed 28.8% of the weight of the second true leaf of MG; the third true leaf of BB weighed 26.1 % of the weight of the third true leaf of MG; and the fourth true leaf of BB weighted 15.5% of the weight of the fourth true leaf of MG. This is a significant and unexpected difference in weight when the leaves of the two cultivars were similar in overall size. The greater weight per leaf in the dwarf lettuce of the method of the present invention represents significantly higher yield per acre and therefore lower growing cost per pound when compared to non-dwarf conventional lettuce used for baby leaf production. The weight difference between the dwarf and non-dwarf lettuce is due to thicker leaves. The thicker leaves are more turgid and have similar texture to mature non-baby leaf non-dwarf iceberg lettuce leaves.

**TABLE 5. Comparison of the Weights of the First Four True Leaves of Dwarf Lettuce Cultivar Mini-Green (MG) and Non-Dwarf Lettuce Cultivar Blockbuster (BB) at Market Size after Growing in the Field.**

| **Plant #** | **1^{st} Leaf** | | **2^{nd} Leaf** | | **3^{rd} Leaf** | | **4^{th} Leaf** | |
|---|---|---|---|---|---|---|---|---|
| | **MG** | **BB** | **MG** | **BB** | **MG** | **BB** | **MG** | **BB** |
| 1 | 1.5633 | 0.2031 | 1.5961 | 0.5079 | 1.8422 | 0.3711 | 2.3053 | 0.2140 |
| 2 | 1.209 | 0.2199 | 1.3088 | 0.4472 | 1.5721 | 0.4014 | 2.0685 | 0.4680 |
| 3 | 1.2129 | 0.1875 | 1.3935 | 0.4423 | 1.916 | 0.4003 | 1.8544 | 0.4521 |
| 4 | 0.989 | 0.1593 | 1.8692 | 0.4581 | 2.1423 | 0.6518 | 1.8402 | 0.3082 |
| 5 | 0.8923 | 0.2052 | 1.5508 | 0.3680 | 2.0068 | 0.3310 | 1.9861 | 0.3727 |
| 6 | 1.43 | 0.1782 | 1.606 | 0.4302 | 1.7842 | 0.6521 | 2.3044 | 0.4323 |
| 7 | 0.9549 | 0.2442 | 1.734 | 0.2418 | 2.3261 | 0.7368 | 2.551 | 0.3796 |
| 8 | 1.6487 | 0.1349 | 1.2394 | 0.4614 | 1.6773 | 0.6625 | 2.2774 | 0.3755 |
| 9 | 1.1883 | 0.1783 | 1.1902 | 0.3966 | 2.0516 | 0.3458 | 2.1212 | 0.1199 |
| 10 | 1.0142 | 0.1836 | 1.9781 | 0.6988 | 1.7471 | 0.4198 | 1.8504 | 0.1594 |
| Ave. | 1.2103 | 0.1894 | 1.5466 | 0.4452 | 1.9066 | 0.4973 | 2.1159 | 0.3282 |

### Example 7. Method for Using Dwarf Iceberg Lettuce Cultivar Mini-Green for Baby Leaf Lettuce Production in the Greenhouse

According to the method of the present invention, dwarf iceberg lettuce cultivar Mini-Green lettuce seeds were sown raw in trays on 3-foot (0.91 m) high benches in a poly tunnel greenhouse near Gilroy, California. There were 178 cells in each tray or approximately one cell per inch. Seeds of the non-dwarf conventional lettuce cultivar Blockbuster were also sown in a similar manner. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on July 19, 2007. Both types of plants were harvested when they reached market size. Table 6 shows the comparison between the sizes in millimeters of the first four true leaves of Mini-Green (MG) and Blockbuster (BB) at market size. Blockbuster, the non-dwarf conventional lettuce cultivar took 18 days to reach market size in the greenhouse. Unexpectedly, Mini-Green, the dwarf cultivar, took 39 days to reach market size in the greenhouse. Mini-Green is the dwarf variety and Blockbuster is the non-dwarf, conventional variety.

As shown in Table 6, the leaves of the dwarf lettuce cultivar are shorter but wider than the leaves of the non-dwarf conventional lettuce cultivar 39 and 18 days after planting in the greenhouse. The first true leaf of Mini-Green (MG, the dwarf lettuce cultivar) was 68.7% the length and 162.3% the width of Blockbuster (BB, the non-dwarf conventional lettuce cultivar); the second true leaf of MG was 61.4% the length and 134.1 % the width of BB; the third true leaf of MG was 79% the length and 144.6% the width of BB; and the fourth true leaf of MG was 105.7% the length and 177.3% the width of BB 39 and 18 days after planting in the greenhouse respectively. The slower and smaller growth rate of the dwarf lettuce in the method of the present invention allows for the leaves to stay within market specifications for a much longer time. It also adds to the leaf thickness and provides a baby leaf size with many mature leaf qualities (texture and flavor). Thus, the method of the present invention provides lettuce leaves that will continue to be baby leaf size after the leaves of the non-dwarf conventional lettuce cultivar have become oversize.

**TABLE 6. Comparison of Dwarf Lettuce Cultivar Mini-Green (MG) and Non-Dwarf Lettuce Cultivar Blockbuster (BB) First Four True Leaf Sizes in mm at Market Size 39 Days after Planting for MG and 18 Days after Planting for BB.**

| | | **1^{st} Leaf** | | **2^{nd} Leaf** | | **3^{rd} Leaf** | | **4^{th} Leaf** | |
|---|---|---|---|---|---|---|---|---|---|
| **Plant #** | **L/W** | **MG** | **BB** | **MG** | **BB** | **MG** | **BB** | **MG** | **BB** |
| 1 | Length | 41 | 65 | 57 | 92 | 73 | 96 | 81 | 70 |
| | Width | 30 | 18 | 39 | 30 | 49 | 29 | 61 | 26 |
| 2 | Length | 45 | 70 | 50 | 86 | 81 | 64 | 95 | 105 |
| | Width | 30 | 22 | 33 | 24 | 47 | 22 | 54 | 36 |
| 3 | Length | 47 | 67 | 60 | 105 | 74 | 95 | 90 | 78 |
| | Width | 32 | 20 | 42 | 32 | 46 | 27 | 59 | 28 |
| 4 | Length | 50 | 63 | 64 | 95 | 71 | 122 | 84 | 75 |
| | Width | 35 | 17 | 41 | 35 | 45 | 45 | 57 | 35 |
| 5 | Length | 47 | 62 | 55 | 84 | 74 | 50 | 84 | 96 |
| | Width | 31 | 20 | 41 | 32 | 48 | 29 | 50 | 41 |
| 6 | Length | 39 | 52 | 53 | 90 | 62 | 83 | 80 | 66 |
| | Width | 31 | 17 | 48 | 29 | 43 | 30 | 55 | 24 |
| 7 | Length | 38 | 57 | 52 | 85 | 56 | 86 | 64 | 36 |
| | Width | 25 | 17 | 33 | 30 | 41 | 35 | 42 | 22 |
| 8 | Length | 35 | 57 | 49 | 92 | 57 | 80 | 61 | 67 |
| | Width | 27 | 16 | 37 | 30 | 40 | 31 | 44 | 22 |
| 9 | Length | 40 | 62 | 55 | 68 | 71 | 81 | 74 | 90 |
| | Width | 24 | 21 | 37 | 19 | 49 | 30 | 45 | 40 |
| 10 | Length | 41 | 61 | 47 | 86 | 62 | 105 | 66 | 54 |
| | Width | 32 | 15 | 38 | 29 | 46 | 36 | 56 | 21 |
| Ave. Length | | 42.3 | 61.6 | 54.2 | 88.3 | 68.1 | 86.2 | 77.9 | 73.7 |
| Ave. Width | | 29.7 | 18.3 | 38.9 | 29 | 45.4 | 31.4 | 52.3 | 29.5 |

### Example 8. Method for Using Dwarf Iceberg Lettuce Cultivar Mini-Green for Baby Leaf Lettuce Production in the Greenhouse

According to the method of the present invention, dwarf iceberg lettuce cultivar Mini-Green lettuce seeds were sown raw in trays on 3-foot (0.91 m) high benches in a poly tunnel greenhouse near Gilroy, California. There were 178 cells in each tray or approximately one cell per inch. Seeds of the non-dwarf conventional lettuce cultivar Blockbuster were also sown in a similar manner. After germination, the plants were sprayed weekly for downy mildew *(Bremia lactucae)* using a standard fungicide and for pests using a pyrethroid pesticide. No fertilizers were applied.

Both types of lettuce seeds, the dwarf (Mini-Green) and the non-dwarf conventional (Blockbuster), were sown on July 19, 2007. Both types of plants were harvested when they reached market size. Table 7 shows the comparison between the leaf weights in grams of the first four true leaves of Mini-Green and Blockbuster at market size. Blockbuster, the non-dwarf conventional lettuce cultivar took 18 days to reach market size in the greenhouse. Unexpectedly, Mini-Green, the dwarf cultivar, took 39 days to reach market size in the greenhouse. Also unexpectedly, the leaf weights of the first four true leaves of the dwarf cultivar were significantly greater than those of the non-dwarf cultivar at market size. Mini-Green is the dwarf variety and Blockbuster is the non-dwarf, conventional variety.

As shown in Table 7, the weights of the first four true leaves of the dwarf lettuce cultivar were significantly greater than those of the non-dwarf conventional lettuce cultivar. The first true leaf of Blockbuster (BB, the non-dwarf conventional lettuce cultivar) was 55.7% the weight of the first true leaf of Mini-Green (MG, the dwarf lettuce cultivar); the second true leaf of BB was 71.8% of the weight of the second true leaf of MG; the third true leaf of BB was 58.3% of the third true leaf of MG; and the fourth true leaf of BB was 35.2% of the weight of the fourth true leaf of MG 18 and 39 days after planting in the greenhouse respectively. This is significant and unexpected difference in weight between the two cultivars when the leaves were near similar size. The greater weight per leaf in the dwarf lettuce of the method of the present invention represents significantly higher yield per acre and therefore lower growing cost per pound when compared to non-dwarf conventional lettuce used for baby leaf production. The weight difference between the dwarf and non-dwarf types is due to thicker leaves. The thicker leaves are more turgid and have similar texture to mature non-baby leaf non-dwarf iceberg lettuce leaves. Dwarf baby leaf lettuce grown in the greenhouse in the method of the present invention has similar qualities to dwarf baby leaf grown in the field in the method of the present invention. It is slower to reach market size, is higher yielding, has smaller leaves that stay within market specifications longer and has leaves with the desired qualities of mature non-baby leaf non-dwarf conventional lettuce.

**TABLE 7. Comparison of the Weights of the First Four True Leaves of Dwarf Lettuce Cultivar Mini-Green (MG) and Non-Dwarf Lettuce Cultivar Blockbuster (BB) at Market Size Grown in the Greenhouse.**

| **Plant #** | **1^{st} Leaf** | | **2^{nd} Leaf** | | **3^{rd} Leaf** | | **4^{th} Leaf** | |
|---|---|---|---|---|---|---|---|---|
| | **MG** | **BB** | **MG** | **BB** | **MG** | **BB** | **MG** | **BB** |
| 1 | 0.25 | 0.1225 | 0.4406 | 0.3648 | 0.647 | 0.6102 | 0.8876 | 0.4599 |
| 2 | 0.3495 | 0.1280 | 0.4667 | 0.4910 | 0.6154 | 0.3822 | 0.5601 | 0.5416 |
| 3 | 0.1695 | 0.1721 | 0.4999 | 0.2707 | 0.5621 | 0.3278 | 0.934 | 0.4834 |
| 4 | 0.2606 | 0.1269 | 0.273 | 0.3075 | 0.8317 | 0.4660 | 1.0427 | 0.2443 |
| 5 | 0.2011 | 0.1430 | 0.5374 | 0.1277 | 0.8181 | 0.4605 | 0.7625 | 0.1043 |
| 6 | 0.2902 | 0.2008 | 0.5438 | 0.3302 | 0.5166 | 0.3929 | 0.8452 | 0.3065 |
| 7 | 0.3514 | 0.1042 | 0.3764 | 0.3128 | 0.7202 | 0.3400 | 0.7425 | 0.3408 |
| 8 | 0.1973 | 0.1606 | 0.5124 | 0.3395 | 0.6822 | 0.3161 | 0.6339 | 0.1848 |
| 9 | 0.2483 | 0.1485 | 0.3877 | 0.3175 | 0.4542 | 0.2566 | 0.9774 | 0.1604 |
| 10 | 0.2749 | 0.1376 | 0.4338 | 0.3516 | 0.7556 | 0.2979 | 1.086 | 0.1540 |
| Ave. | 0.2593 | 0.1444 | 0.4472 | 0.3213 | 0.6603 | 0.3850 | 0.8472 | 0.298 |

### Example 9. Method for Using Dwarf Iceberg Lettuce Cultivar Blush for Baby Leaf Production

According to the method of the present invention, the dwarf iceberg lettuce cultivar Blush is used. Seeds of cultivar Blush can be obtained from the National Center for Genetic Resources Preservation, 1111 South Mason, Fort Collins, Colorado 80521 or the United States Agricultural Research Station, United States Department of Agriculture, Agricultural Research Service, 1636 East Alisal Street, Salinas, California 93905.

Dwarf iceberg lettuce cultivar Blush has small "orange-sized" heads that are packed with crispy, succulent and tasty leaves of deep green, tinged in red. Cultivar Blush lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves. Seeds of cultivar Blush can be obtained from the USDA seed collection in Fort Collins, Colorado or the USDA Research Station in Salinas, California.

### Example 10. Method for Using Dwarf Iceberg Lettuce Cultivar Ice Cube for Baby Leaf Production

According to the method of the present invention, dwarf iceberg lettuce cultivar Ice Cube is used. Seeds of cultivar Ice Cube can be obtained from the National Center for Genetic Resources Preservation, 1111 South Mason, Fort Collins, Colorado 80521 or the United States Agricultural Research Station, United States Department of Agriculture, Agricultural Research Service, 1636 East Alisal Street, Salinas, California 93905.

Dwarf Ice Cube lettuce cultivar is a dwarf iceberg lettuce that reaches tennis ball size in about 75 days. It is adapted to a wide variety of environments and has a medium green color. Appearance (other than size) is very similar to the cultivar Salinas (USDA release 1973). Cultivar Ice Cube lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves. Seeds of cultivar Ice Cube can be obtained from the USDA seed collection in Fort Collins, Colorado or the USDA Research Station in Salinas, California.

### Example 11. Method for Using Transformed Lettuce Resulting in Dwarfism for Baby Leaf Production

According to the method of the present invention, any lettuce cultivar which, through transformation, expresses the dwarf phenotype is used. Exemplary genes which are used to transform non-dwarf lettuce into dwarf lettuce include, but are not limited to, a brassinosteroid inhibitor such as that described by Yoshida et al. (U.S. Patent No. 6,388,089); a bas1 gene or homolog as described in Neff et al. (U.S. Patent No. 6,534,313); the L10 and 69 genes or homologs thereof as described in Amasino et al. (U.S. Patent No. 6,921,849); rot3, cyp90c1 and cyp90d1 or homologs thereof as described in Tsukaya et al. (U.S. Patent Publication No. 20050246797); the signal transduction gene or homologs thereof as disclosed in Hirochika et al. (U.S. Patent No. 6,984,727); the dwf4 gene or homologs thereof as disclosed in Azpiroz et al. (U.S. Patent No. 6,987,025); a gene modulator or gene mediators of protein CYP90B as disclosed in Azpiroz et el. (U.S. Patent No. 7,253,336); an antisense nucleotide of OsBRl1 as disclosed in Tanaka et al. (U.S. Patent No. 7,135,625); a gene or genes for brassinosteroid-specific glycosyltransferase(s) as disclosed in Poppenberger et al. (U.S. Patent Publication No. 20070107083); a gibberellin 20-oxidase gene or homologs thereof as disclosed in Niki et al. 2001. Production of dwarf lettuce by overexpressing a pumpkin gibberellin 20-oxidase gene. Plant Phys. 126:965-972.

Dwarf lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves.

### Example 12. Method for Using Lettuce Containing One or More Alleles Resulting in Dwarfism for Baby Leaf Production

According to the method of the present invention, any lettuce cultivar which expresses the dwarf phenotype is used. One or more alleles conferring the dwarf phenotype are introduced into lettuce cultivars through traditional breeding practices well known to one skilled in the art. Traditional plant breeding practices include, but are not limited to, crossing, selfing, sibbing and backcrossing. For a discussion of traditional plant breeding practices see Poehlman, J. et al. 1995. Breeding Field Crops. 4th Ed. Blackwell Publishing. Exemplary genes or alleles which confer the dwarf phenotype include, but are not limited to, a brassinosteroid inhibitor such as that described by Yoshida et al. (U.S. Patent No. 6,388,089); a bas1 gene or homolog as described in Neff et al. (U.S. Patent No. 6,534,313); the L10 and 69 genes or homologs thereof as described in Amasino et al (U.S. Patent No. 6,921,849); rot3, cyp90c1 and cyp90d1 or homologs thereof as described in Tsukaya et al. (U.S. Patent Publication No. 20050246797); the signal transduction gene or homologs thereof as disclosed in Hirochika et al. (U.S. Patent No. 6,984,727); the dwf4 gene or homologs thereof as disclosed in Azpiroz et al. (U.S. Patent No. 6,987,025); a gene modulator or gene modulators of protein CYP90B as disclosed in Azpiroz et el. (U.S. Patent No. 7,253,336); an antisense nucleotide of OsBRI1 as disclosed in Tanaka et al. (U.S. Patent No. 7,135,625); a gene or genes for brassinosteroid-specific glycosyltransferase(s) as disclosed in Poppenberger et al. (U.S. Patent Publication No. 20070107083); a gibberellin 20-oxidase gene or homologs thereof as disclosed in Niki et al. 2001. Production of dwarf lettuce by overexpressing a pumpkin gibberellin 20-oxidase gene. Plant Phys. 126:965-972.

Dwarf lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves.

### Example 13. Method for Using Naturally Occurring Lettuce Mutant Resulting in Dwarfism for Baby Leaf Production

According to the method of the present invention, any lettuce cultivar which contains one or more naturally occurring mutations which results in dwarfism of the lettuce cultivar is used. Exemplary natural mutants include, but are not limited to, the dwarf-5 lettuce mutant as described in Kim, Z-H. 2004. Inheritance and characteristics of a new dwarf mutant in lettuce. J. Kor. Soc. Hort. Sci. 45(6):277-280; and the dwf-2 lettuce mutant as described in Waycott, W. et al. 1995. Inheritance of dwarfing genes in Lactuca sativa L. J. Heredify. 86:39-44. Dwarf lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves.

### Example 14. Method for Using Induced Lettuce Mutants Resulting in Dwarfism for Baby Leaf Production

According to the method of the present invention, any dwarf lettuce cultivar which is the result of one or more induced mutations is used. Exemplary of dwarfing alleles which are the result of induced mutations include, but are not limited to, the dwf-1, dwf-3 and dwf-4 alleles or homologs thereof as described in Waycott, W. et al. 1995. Inheritance of dwarfing genes in Lactuca sativa L. J. Heredity. 86:39-44 in which ethyl methanesulfonate was used to induce mutations in non-dwarf early flowering lettuce to obtain dwarf lettuce plants. Dwarf lettuce cultivars which result from the production of induced mutations are used according to the method of the present invention. Mutations may be induced by any known mutagen including, but not limited to, various types of radiation, UV light, chemical mutagens and the like. Dwarf lettuce seed, either pelleted or raw, is sown at a high density, generally between one million seeds per acre and five million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves.

### Example 15. Method for Using Dwarf Lettuce Cultivars Resulting from Brassinosteroid Inhibition for Baby Leaf Production

According to the method of the present invention, any lettuce cultivar which, through application of a brassinosteroid inhibitor, expresses the dwarf phenotype is used. Exemplary brassinosteroid inhibitors which are used to produce dwarf lettuce plants include, but are not limited to, a brassinosteroid inhibitor or any of its effective analogs such as that described by Yoshida et al (U.S. Patent No. 6,388,089); and the brassinosteroid inhibitors or any of their effective analogs such as those described by Asami et al. (U.S. Patent No. 6,989,351).

Dwarf lettuce seed, either pelleted or raw, is sown at a high density, generally between one million seeds per acre and 5 million seeds per acre. The seed can be sown on preformed bed tops, ground level, bench tops or in trays; it can be sown in glasshouses, open fields or under protective mesh or "hoop houses". The seed can be sown by hand or by machine.

Germination is accomplished through the addition of water. In summer, the leaves are harvested about 25 days to about 35 days after germination; in winter, the leaves are harvested about 45 days to about 55 days after germination. The lettuce is harvested by hand or machine. After being harvested the lettuce leaves can be either washed or unwashed and can be either mixed or sold as separate leaves.

## Claims

1. A method for producing baby leaf lettuce comprising the steps of
a. planting seeds of dwarf lettuce;
b. growing dwarf lettuce plants; and
c. harvesting said plants when they reach baby leaf size.

2. The method of claim 1, wherein said seeds are planted in a field at a density of between 1 million seeds per acre and 5 million seeds per acre.

3. The method of claim 1 or 2, wherein said seeds are planted in a field with an average final spacing of between zero inches and 3 inches.

4. The method of claim 1 wherein said dwarf lettuce is selected from lettuce cultivar Blush, lettuce cultivar Ice Cube, and lettuce cultivar Mini-Green.

5. The method of claim 1, wherein said dwarf lettuce is a transformed lettuce, a naturally occurring dwarf lettuce, or a lettuce comprising an induced mutation; or wherein said dwarf lettuce results from the application of at least one brassinosteroid inhibitor.

6. The method of any one of the preceding claims, wherein said dwarf lettuce comprises one or more alleles selected from dwf-2, dwf-3, dwf-4, dwarf-5, bas1, L10, 69, rot3, cyp90c1, cyp90d1, at least one gene modulator of protein CYP90B, one or more genes for at least one brassinosteroid-specific glycosyltransferase, a gibberellin 20-oxidase gene, and an antisense nucleotide of OsBRl1.

7. The method of any one of the preceding claims, wherein said dwarf lettuce has leaves which weigh greater than 25% more than the leaves of non-dwarf conventional lettuce at baby leaf size.

8. The method of any one of the preceding claims, wherein said dwarf lettuce has leaves which weigh between 25% and 65% more than the leaves of non-dwarf conventional lettuce at baby leaf size when grown in a greenhouse; or wherein said dwarf lettuce has leaves which weigh between 60% and 85% more than the leaves of non-dwarf conventional lettuce at baby leaf size when grown in a field.

9. The method of any one of the preceding claims, wherein said harvesting occurs from the day said dwarf lettuce first reaches minimum baby leaf size to 10 days after said dwarf lettuce first reaches minimum baby leaf size.

10. The method of any one of the preceding claims, wherein said harvesting occurs from the day said dwarf lettuce first reaches minimum baby leaf size to 2 days after said dwarf lettuce first reaches minimum baby leaf size; from 2 days after said dwarf lettuce first reaches minimum baby leaf size to 4 days after said dwarf lettuce first reaches minimum baby leaf size; from 4 days after said dwarf lettuce first reaches minimum baby leaf size to 6 days after said dwarf lettuce first reaches minimum baby leaf size; from 6 days after said dwarf lettuce first reaches minimum baby leaf size to 8 days after said dwarf lettuce first reaches minimum baby leaf size; or from 8 days after said dwarf lettuce first reaches minimum baby leaf size to 10 days after said dwarf lettuce first reaches minimum baby leaf size.

11. The method of any one of the preceding claims wherein the lettuce is harvested for human consumption.

12. The method of any one of the preceding claims further comprising packaging the harvested lettuce.

13. The method of claim 13 wherein leaves of the lettuce are separated and packaged.

14. The method of claims 13, wherein said leaved of the lettuce are packaged into a salad mix.

15. The method of claim 14 wherein said salad mix comprises more than one type of lettuce.
